(19) **Europäisches Patentamt / European Patent Office / Office européen des brevets**

(11) **EP 4 052 902 B1**

(12) **EUROPEAN PATENT SPECIFICATION**

(45) Date of publication and mention
of the grant of the patent:
**07.01.2026 Bulletin 2026/02**

(21) Application number: **21160081.2**

(22) Date of filing: **01.03.2021**

(51) International Patent Classification (IPC):
**B32B 27/08** (2006.01)   **B32B 27/30** (2006.01)
**B32B 27/32** (2006.01)   **C08J 5/18** (2006.01)
**C08L 23/08** (2025.01)

(52) Cooperative Patent Classification (CPC):
**C08L 23/08; B32B 27/08; B32B 27/30;**
**B32B 27/32; B32B 27/327;** B32B 2250/02;
B32B 2250/24; B32B 2250/246; B32B 2255/10;
B32B 2255/26; B32B 2270/00; B32B 2307/40;
B32B 2307/406; B32B 2307/408; B32B 2307/412;
(Cont.)

(54) **HIGH-BARRIER POLYETHYLENE FILM FOR PACKAGING**

HOCHSPERRENDE POLYETHYLENFOLIE FÜR VERPACKUNGEN

FILM DE POLYÉTHYLÈNE À BARRIÈRE ÉLEVÉE POUR L'EMBALLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.09.2022 Bulletin 2022/36**

(73) Proprietors:
• **Borealis GmbH**
**1020 Vienna (AT)**
• **Abu Dhabi Polymers Co. Ltd (Borouge) LLC**
**Abu Dhabi (AE)**

(72) Inventors:
• **GITSAS, Antonis**
**4021 Linz (AT)**
• **BERTHELIER, Anthony**
**92400 Courbevoie (FR)**

• **SEMAAN, Chantal**
**08008 Barcelona (ES)**
• **BURYAK, Andrey**
**4021 Linz (AT)**
• **DAS, Subrata Kumar**
**Abu Dhabi (AE)**
• **SINGH, Raghvendra**
**Abu Dhabi (AE)**
• **AL TALAFHA, Mohammad**
**Abu Dhabi (AE)**
• **ZHANG, Susan**
**Abu Dhabi (AE)**

(74) Representative: **Kador & Partner Part mbB**
**Corneliusstraße 15**
**80469 München (DE)**

(56) References cited:
**EP-A1- 2 077 296   EP-A1- 2 415 598**
**EP-A1- 3 101 060   US-A- 4 265 949**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

(52) Cooperative Patent Classification (CPC): (Cont.)
B32B 2307/7166; B32B 2307/72; B32B 2307/7244;
B32B 2307/7246; B32B 2307/75; B32B 2439/70;
Y02W 30/80

**Description**

The present invention relates to a layered polyethylene film for barrier coating, to a process for forming the barrier coated film, to a laminate and article comprising the barrier coated film and to the use of the barrier coated film or the laminate for packaging of an article.

Laminated films are widely used for flexible packaging markets and typical 2/3-ply laminates are commonly used in polyethylene flexible packaging applications. Currently, most of such laminates are made with polyethylene (PE) sealant films laminated with another material to provide stiffness or other desired properties like barrier performance and optical properties (gloss and transparency). Often, this other material is polyethylene terephthalate (PET), polypropylene and/or aluminium foil and/or a polyamide (such as Nylon). Nowadays there is a trend to provide "100% PE" solutions, i.e. laminates consisting of a PE film laminated to a further PE film structure, since such laminates based on a single class of resin can be more easily recycled.

Compared to these other functional material, polyethylene materials used in flexible laminates have weaker barrier properties (both oxygen barrier and moisture barrier). One means to improve barrier performance of polyethylene film is to use metallization or other special barrier coating on PE surface that provide an extremely superior barrier layer for both moisture barrier (low water vapor transmission rate, WVTR) and oxygen barrier (low oxygen transmission rate, OTR).

However, common PE products used in skin/surface layers of multilayer polyethylene films are not suitable for barrier coating due to their inability to match critical requirements like good coating adhesion and bond strength. To comply with such requirements, a clean polyethylene film surface without surface defects (because visibility of such defects is amplified after coating) and films with low haze must be obtained.

Combination of properties like good barrier coating (such as metal) bond strength, lower decay of surface energy, very good gloss and/or clean polyethylene surface and sufficient film stiffness along with good barrier properties are not available in PE flexible packaging solutions used in the industry. EP3101060 relates to films used in food packaging applications.

It is an object of the present invention to provide a layered polyethylene film which after barrier coating yields a barrier coated polyethylene film having the desired combination of properties as outlined above, in particular having sufficient film stiffness with, superior optical properties (surface gloss), improved barrier properties and good barrier coating adhesion for their subsequent use. The present invention is based on the finding that such a film can be obtained if it has an outer layer for barrier coating which is made of a composition which comprises a catalytically produced polyethylene and which has a comparatively low xylene soluble (XS) content.

The invention therefore provides a layered polyethylene film comprising an outer layer for barrier coating made of an outer layer composition, an inner layer which is an external layer of the film on the side opposite to the outer layer, wherein the inner layer is made of an inner layer composition; and a core layer, which is present as an intermediate layer in between the outer and inner layer of the film, wherein the core layer is made of a core layer composition, wherein the outer layer composition comprises a) a catalytically produced polyethylene component AO which is an ethylene copolymer having an MFR2 determined according to ISO 1133 of from 0.5 to 10 g/10min and a density of 920 to 935 kg/m$^3$, and component AO is present in the outer layer composition in an amount of at least 70 wt.%, wherein the outer layer composition has xylene soluble (XS) fraction determined according to ISO 16152 of 2 wt.% or less, and all polymer components present in the inner layer composition and in the core layer composition comprise polyethylenes.

The outer layer composition has xylene soluble (XS) fraction determined according to ISO 16152 preferably of 1.5 wt.% or less.

The layered polyethylene film of the invention is ideally suited for barrier coating of its outer layer as this layer has a clean film surface without surface defects and low haze. After barrier coating, the film has superior barrier properties both as regards its moisture (WVTR) and oxygen (OTR) barrier.

Furthermore, the film offers good barrier coating (by e.g. metal material) bond strength, i.e. the adhesion of the barrier coating layer on the outer layer is very good and the surface energy retention is superior, a lower decay of surface energy, very good gloss and sufficient film stiffness.

The expression "catalytically produced" polyethylene denotes polyethylenes which have been produced in a process using a catalyst, such as a Ziegler-Natta or a metallocene catalyst, preferably have been produced in a process using a metallocene catalyst.

The expression "ethylene copolymer" denotes a polyethylene which contains one or more types of comonomers.

In a preferred embodiment the outer layer composition further comprises

b) a high-pressure produced polyethylene component (BO) which is a LDPE having an MFR$_2$ determined according to ISO 1133 of from 0.25 to 2 g/10min and a density of 915 to 930 kg/m$^3$,

wherein preferably component BO is present in the outer layer composition in an amount of from 5 to 40 wt.%, preferably of from 10 to 30 wt.%, and still more preferably of from 12 to 25 wt.% based on the total weight of the outer layer composition.

In one embodiment, the outer layer composition consists of components AO and BO of any one of the embodiments for AO and/or BO as described herein.

The expression "high-pressure produced" polyethylene denotes polyethylenes which have been produced in a high pressure process, wherein the pressure used is significantly higher than in catalytic processes for polyethylene production, and polymerization is based on a radical mechanism. Usually, such processes are carried out in autoclave or tubular reactors.

Typically, polyethylene produced in such a high pressure process are denoted as low-density ethylene homopolymer (LDPE) and typically contain long chain branching.

**Outer Layer**

The outer layer of the layered film of the invention is one of the external layers of the film which is suitable and intended for barrier coating. It is made from an outer layer composition.

Preferably, the outer layer composition has a xylene soluble fraction of 1.4 wt.% or less, more preferably of 1.3 wt.% and still more preferably of 1.2 wt.% or less, and most preferably of 1.1 wt.% or less, determined as specified herein below.

Usually, the outer layer composition has a xylene soluble fraction of 0.3 wt.% or higher.

Preferably, the outer layer composition has a density of 920 to 935 kg/m$^3$, more preferably of 923 to 933 kg/m$^3$, and most preferably of 924 to 930 kg/m$^3$.

Component AO of the outer layer composition preferably has a xylene soluble fraction of 1.5 wt.% or less, more preferably of 1.25 wt.% or less, still more preferably of 1.0 wt.% or less, still more preferably of 0.8 wt.% or less, and most preferably of 0.7 wt.% or less, determined as specified herein below. Usually, component AO of the outer layer composition has a xylene soluble fraction of 0.2 wt.% or higher.

Preferably, component AO is present in the outer layer composition in an amount of at least 70 wt.%, and still more preferably at least 75 wt.%.

The outer layer composition preferably contains only polyethylene components, more preferably, the outer layer composition consists of components AO and BO.

Preferably, component AO has a ratio $MFR_{21}/MFR_2$ of 13 to 30 and/or a MWD of 5 or less.

Preferably, component AO has a density of 920 to 933 kg/m$^3$, more preferably of 923 to 930 kg/m$^3$.

Component AO preferably has a $MFR_2$ in the range of from 0.5 to 2.5 g/10min, and particularly preferred from 1.0 to 1.8 g/10min.

Component AO of the outer layer composition preferably is a multimodal ethylene terpolymer (I), wherein the comonomers are preferably selected from alpha-olefins having from 4 to 10 carbon atoms.

The multimodal terpolymer (I) preferably comprises, or consists of, a multimodal polymer of ethylene with at least two different comonomers selected from alpha-olefins having from 4 to 10 carbon atoms, which has a ratio $MFR_{21}/MFR_2$ of 13 to 30 and a MWD of 5 or less.

Usually, the MWD of terpolymer (I) is 3 or higher.

Such multimodal ethylene terpolymers are disclosed, for example, in WO 2016/083208. As far as definitions (such as for the "modality" of a polymer) and production methods for these ethylene terpolymers are concerned it is referred to WO 2016/083208. Furthermore, all embodiments and preferred embodiments of such ethylene terpolymers as described in WO 2016/083208 which have a density in the range a density of 920 to 935 kg/m$^3$, preferably 920 to 933 kg/m$^3$, and more preferably of 923 to 930 kg/m$^3$ are also preferred embodiments of the preferred multimodal ethylene terpolymer (I) of component AO in the present application, whether or not explicitly described herein.

The multimodal ethylene terpolymer (I) preferably has a $MFR_2$ in the range of from 0.5 to 2.5 g/10min, and particularly preferred from 1.0 to 1.8 g/10min.

Multimodal ethylene terpolymer (I) preferably has a ratio $MFR_{21}/MFR_2$ of 13 to 30, more preferably of 15 to 25.

The at least two alpha-olefin comonomers having from 4 to 10 carbon atoms of multimodal ethylene terpolymer are preferably 1-butene and 1-hexene.

Preferably, the total amount of comonomers present in multimodal ethylene terpolymer (I) is of 0.5 to 10 mol%, preferably of 1.0 to 8 mol%, more preferably of 1.0 to 5 mol%, more preferably of 1.5 to 5.0 mol% and most preferably 1.1 to 3.0 mol%.

Multimodal ethylene terpolymer (I), which preferably is a bimodal terpolymer, preferably comprises, or consists of, an ethylene polymer component (A) and an ethylene polymer component (B).

Preferably, ethylene polymer component (A) has higher $MFR_2$ than ethylene polymer component (B).

More preferably, the ethylene polymer component (A) has $MFR_2$ of 1 to 50 g/10 min, preferably of 1 to 40 g/10 min, more preferably of 1 to 30 g/10 min, more preferably of 2 to 20 g/10 min, more preferably of 2 to 15 g/10 min, and even more preferably of 2 to 10 g/10 min.

The ratio of the $MFR_2$ of ethylene polymer component (A) to the $MFR_2$ of the ethylene polymer component (B) preferably is 2 to 50, preferably 5 to 40, more preferably 10 to 30, more preferably 10 to 25, and still more preferably 11 to 25.

The ratio of the $MFR_2$ of ethylene polymer component (A) to the $MFR_2$ of the final multimodal terpolymer (I) preferably is of 2 to 10.

Preferably, ethylene polymer component (A) comprises a different comonomer than the ethylene polymer (B).

Preferably, ethylene polymer component (A) has lower amount (mol%) of comonomer than ethylene polymer component (B), more preferably, the ratio of [the amount (mol%) of alpha-olefin comonomer having from 4 to 10 carbon atoms comonomer present in ethylene polymer component (A)] to [the amount (mol%) of at least two alpha-olefin comonomers having from 4 to 10 carbon atoms of the final multimodal ethylene terpolymer] is of 0.2 to 0.6, preferably of 0.25 to 0.5.

Preferably, the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

The amount of comonomer in component (A) is preferably from 0.15 to 1.0 mol%.

Preferably, the amount of comonomer in component (B) is 1.5 to 3.5 mol%.

Preferably, ethylene polymer component (A) has different, preferably higher, density than the density of the ethylene polymer component (B).

The density of the ethylene polymer component (A) is preferably 925 to 950 kg/m$^3$, more preferably 930 to 945 kg/m$^3$, and most preferably 935 to 940 kg/m$^3$.

Preferably, multimodal ethylene terpolymer (I) comprises the ethylene polymer component (A) in an amount of 30 to 70 wt.%, preferably of 40 to 60 wt.%, more preferably of 35 to 50 wt.%, more preferably 40 to 50 wt.% and the ethylene polymer component (B) in an amount of 70 to 30 wt.%, preferably of 60 to 40 wt.%, more preferably of 50 to 65 wt.%, more preferably 50 to 60 wt.%, based on the total amount (100 wt.%) of the multimodal ethylene terpolymer.

Most preferably, multimodal ethylene terpolymer (I) consists of the ethylene polymer components (A) and (B) as the sole polymer components. Accordingly, the split between ethylene polymer component (A) to ethylene polymer component (B) is of (30 to 70):(70 to 30) preferably of (40 to 60):(60 to 40), more preferably of (35 to 50):(65 to 50), more preferably of (40 to 50):(50 to 60).

In a particularly preferred embodiment, multimodal terpolymer (I) is a bimodal terpolymer, i.e. comprises a low molecular weight and a high molecular weight component, and has a MFR$_2$ of 1.0 to 1.8 g/10 min, and/or an MFR$_5$ of 2.8 to 4.0 g/10 min and/or a MFR$_{21}$ of 20 to 36 g/10 min, and/or a density of 925 to 929 kg/m$^3$, and/or a molecular weight distribution (MWD) of 3.0 to 5.0, and/or a M$_n$ of 15 to 25 kg/mol, and/or a M$_w$ of 70 to 125 kg/mol, and/or a MFR$_{21}$/MFR$_2$ ratio (FRR$_{21/2}$) of 15 to 25 and/or a MFR$_{21}$/MFR$_5$ ratio (FRR$_{21/5}$) of 6 to 9.

All molecular weight parameters are measured by GPC conventional method as further described in detail below.

Preferred as multimodal ethylene terpolymers (I) are also such commercially available as Anteo™ from Borealis or Borouge having the properties as required herein, especially Anteo™ FK 2715.

In addition to component AO the outer layer composition preferably comprises component BO, which is a low density polyethylene (LDPE). LDPEs are well known in the art and are produced in high pressure process usually performed in a tubular reactor or an autoclave.

LDPEs and their production are, for example, described in WO 2017/055174, page 9, line 29 to page 12, line 6, to which it is referred.

The LDPE of component BO preferably has a density of 918 to 928 kg/m$^3$, more preferably of 919 to 927 kg/m$^3$, and most preferably of 920 to 925 kg/m$^3$.

Preferably, the LDPE of component BO has a MFR$_2$ of 0.3 to 1.7 g/10min, more preferably of 0.4 to 1.5 g/10min, and most preferably of 0.5 to 1.0 g/10min.

In a particularly preferred embodiment, the LDPE of component BO has a MFR$_2$ of 0.5 to 1.0, and/or a density of 920 to 925 kg/m$^3$, and/or a MWD of 5 to 8, and/or M$_n$ of 12 to 18 kg/mol, and/or a M$_w$ of 85 to 130 kg/mol.

All molecular weight parameters of LDPE are measured by GPC viscosity method as further described in detail below.

As LDPE of component BO, resin FT5230 as produced by Borealis may be used.

It is preferred that in the layered polyethylene film of the invention the outer layer makes up from 5 to 20 %, preferably 7 to 15 % of the total thickness of the film.

**Core Layer**

The layered film of the invention usually comprises a core layer, which is not an external layer of the film and is present as an intermediate layer in between the outer and inner layer of the film, either directly adjacent to one or both of these layers or to sub-skin layers, where present. It may be directly adjacent to the outer layer or there may be (a) further layer(s) in between.

In a preferred embodiment, the layered polyethylene film comprises a core layer made of a core layer composition which comprises, or consists of, a catalytically produced polyethylene component (AC) having an MFR$_2$ determined according to ISO 1133 of from 0.2 to 2 g/10min and a density of from 950 to 970 kg/m$^3$ and/or is a catalytically produced polyethylene component BC which is an ethylene copolymer, preferably an ethylene terpolymer (II), having a melt flow rate $MFR_5$ of 0.6 to 4 g/10min and a density of 928 to 940 kg/m$^3$, and/or is a catalytically produced polyethylene component CC which is an ethylene copolymer, preferably a multimodal ethylene copolymer, having a density of 910 kg/m$^3$ to 925 kg/m$^3$ and a $MFR_2$ of 0.5 to 2.0 g/10 min.

In an embodiment of the core layer composition, the core layer comprises, or consists of, a catalytically produced polyethylene component (AC) having an $MFR_2$ determined according to ISO 1133 of from 0.2 to 2 g/10min and a density of from 950 to 970 kg/m$^3$. Polyethylenes with such densities are usually denoted as high density polyethylene (HDPE).

The HDPE of component AC preferably is a multimodal HDPE, more preferably a bimodal HDPE.

The HDPE of component AC preferably has a density of 955 to 968 kg/m$^3$, more preferably of 958 to 965 kg/m$^3$. Such multimodal HDPE and their production are, for example, described in WO 2020/109289, p.19 to 28, to which it is referred.

Preferably, the HDPE is a copolymer. An ethylene copolymer is a polymer which comprises ethylene monomer and one or more comonomer(s). The comonomer can be alpha-olefins having 4 to 12 carbon atoms, e.g. 1-butene, 4-methyl-1-pentene, 1-hexene, 1-octene, 1-decene. More preferably, the HDPE is a copolymer of ethylene and 1-butene, 1-hexene or 1-octene, most preferred is 1-butene.

Preferably, the total amount of comonomers present in the HDPE is of 0.0 to 0.40 mol%, more preferably of 0.01 to 0.30 mol%, and most preferably 0.02 to 0.20 mol%.

Preferably, the HDPE of component AC has a $MFR_2$ of 0.25 to 1.8 g/10min, more preferably of 0.3 to 1.5 g/10min, still more preferably 0.4 to 1 g/10 min, and most preferably 0.5 to 0.9 g/10min.

In a particularly preferred embodiment, the HDPE of component AC has a $MFR_2$ of 0.5 to 0.9 g/10 min, and/or an $MFR_5$ of 2.0 to 3.5 g/10 min and/or a $MFR_{21}$ of 30 to 50 g/10 min, and/or a density of 958 to 965 kg/m$^3$, and/or a molecular weight distribution (MWD) of 10 to 15, and/or a $M_n$ of 7 to 12 kg/mol, and/or a $M_w$ of 100 to 165 kg/mol, and/or a $MFR_{21}/MFR_2$ ratio ($FRR_{21/2}$) of 50 to 75 and/or a $MFR_{21}/MFR_5$ ratio ($FRR_{21/5}$) of 10 to 25.

For all catalytically produced polymers described herein all molecular weight parameters are measured by GPC conventional method as further described in detail below. Comonomer content is measured by NMR spectroscopy as further described in detail below.

As HDPE of component AC, resin Borstar FB5600 as produced by Borouge may be used.

Preferably, component AC is present in the core layer composition in an amount of 30 wt.% or higher, more preferably of 50 wt.% or higher, still more preferably of 75 wt.% or higher and in one embodiment the core layer composition consists of component AC.

In a further embodiment of the core layer composition, the core layer comprises, or consists of, a catalytically produced polyethylene component BC which is an ethylene copolymer, preferably an ethylene terpolymer (II), having a melt flow rate $MFR_5$ of 0.6 to 4 g/10min and a density of 928 to 940 kg/m$^3$.

Preferably, terpolymer (II) comprises, or is consisting of,

a) a low molecular weight polymer which is a binary copolymer of ethylene and a $C_4$ to $C_{12}$ alpha-olefin and

b) a high molecular weight polymer which is either a binary copolymer of ethylene and 1-butene, if the low molecular weight polymer of a) is a binary copolymer of ethylene and a $C_6$ to $C_{12}$ alpha-olefin, or a terpolymer of ethylene, 1-butene and a $C_6$ to $C_{12}$ alpha-olefin.

Such bimodal ethylene terpolymers are, for example, disclosed in WO 03/066698. As far as definitions (such as for the "modality" of a polymer) and production methods for these ethylene terpolymers are concerned it is referred to WO 03/066698. Furthermore, all embodiments and preferred embodiments of such ethylene terpolymers as described in WO 03/066698, which have a density in the range of 928 to 940 kg/m$^3$ are also preferred embodiments of ethylene terpolymer (II) in the present application, whether or not explicitly described herein.

Preferably, terpolymer (II) has a density in the range of 930 to 939 kg/m$^3$.

Preferably, the $C_4$ to $C_{12}$ alpha-olefin of the low molecular weight copolymer fraction is selected from the group of 1-butene, 1-hexene, 4-methyl-1-pentene, 1-octene and 1-decene.

Furthermore, preferably the $C_6$ to $C_{12}$ alpha-olefin of the high molecular weight copolymer fraction is preferably selected from the group of 1-hexene, 4-methyl-1-pentene, 1-octene and 1-decene.

Preferably, terpolymer (II) comprises, or consists of, a) a low molecular weight homopolymer of ethylene and b) a high molecular weight terpolymer of ethylene, 1-butene and a $C_6$ to $C_{12}$ alpha-olefin, preferably a high molecular weight terpolymer of ethylene, 1-butene and 1-hexene.

The weight average molecular weight of terpolymer (II) is preferably between 190,000 to 400,000 g/mol, more preferably between 200,000 to 300,000 g/mol. The low molecular weight polymer fraction has a weight average molecular weight preferably of 4,500 to 55,000 g/mol, more preferably of 5,000 to 50,000 g/mol and the high molecular weight polymer has a weight average molecular weight preferably of 450,000 to 1,000,000 g/mol, more preferably of 500,000 to 1,000,000 g/mol.

Terpolymer (II) preferably has a melt flow rate $MFR_5$ of 0.6 to 4 g/10min, more preferably of 0.7 to 3 g/10min.

Terpolymer (II) preferably has a melt flow rate $MFR_{21}$ of 10 to 50 g/10min, more preferably of 15 to 45 g/10min.

The low molecular weight polymer fraction of terpolymer (II) preferably has a melt index $MFR_2$ of 200 to 800 g/10min, more preferably of 300 to 600 g/10min.

Terpolymer (II) preferably comprises 30 to 60 wt.%, more preferably 35 to 50 wt.% and most preferably 38 to 45 wt.% of the low molecular weight polymer fraction, the remainder being preferably the high molecular weight polymer fraction.

The overall comonomer content in the total polymer is preferably 1 to 7 % by mol, more preferably 2 to 6 % by mol.

Preferably, in the low molecular weight polymer the comonomer content is 0 to 2.5 % by mol, more preferably 0 to 2 % by mol. In the high molecular weight polymer is the comonomer content preferably 2.5 to 11 % by mol, more preferably 3 to 10 % by mol.

In the embodiments wherein terpolymer (II) comprises, or consists of, a) a low molecular weight homopolymer of ethylene and b) a high molecular weight terpolymer of ethylene, 1-butene and 1-hexene, it is preferred that the content of 1-butene in the final polymer is 1.0 to 2.0 % by weight and the content of 1-hexene is 4.0 to 6.0 % by weight.

Preferably, terpolymer (II) has a viscosity η measured at 0.05 rad/s of 10,000 to 65,000 Pa·s, more preferably of 15,000 to 60,000 Pa·s, and most preferably of 20,000 to 55,000 Pa·s.

Preferred multimodal terpolymer (II) are also such commercially available as BorShape™, such as BorShape™ FX1001 and BorShape™ FX1002, from Borealis.

FX1001 is a bimodal LLDPE terpolymer. The low molecular weight fraction is a homopolymer of ethylene having an $MFR_2$ of 400 g/10 min, preferably produced in a loop reactor. In the high molecular weight fraction, preferably produced in a gas phase reactor, ethylene is co-polymerized with 1-butene and 1-hexene as comonomers. The density of the final resin is 931 kg/m$^3$ and the $MFR_5$ is 0.85 g/10 min. The split (LMW/HMW) is 39/61. FX1001 has Mw/Mn of about 14 (from 13 to 15). The content of 1-butene in the final polymer is 1.5 % by weight and the content of 1-hexene is 5.5 % by weight. The viscosity η measured at 0.05 rad/s is 52000 (+/-5000) Pa·s.

FX1002 is a bimodal MDPE terpolymer. The low molecular weight fraction is a homopolymer of ethylene having an $MFR_2$ of 400 g/10 min, preferably produced in a loop reactor. In the high molecular weight fraction, preferably produced in a gas phase reactor, ethylene is co-polymerized with 1-butene and 1-hexene as comonomers. The density of the final resin is 937 kg/m$^3$, the $MFR_5$ is 2 g/10 min and the $MFR_{21}$ is 42 g/10 min. The split (LMW/HMW) is 43/57. FX1002 has Mw/Mn of about 12 (from 11 to 13). The content of 1-butene in the final polymer is 1.5 % by weight and the content of 1-hexene is 4.5 % by weight. The viscosity η measured at 0.05 rad/s is 23000 (+/-3000) Pa·s.

Preferably, component BC is present in the core layer composition in an amount of from 5 to 75 wt.%, more preferably of from 15 to 65 wt.%, still more preferably of from 30 to 60 wt.% and most preferably of from 35 to 55 wt.%.

In still a further embodiment of the core layer composition, the core layer comprises, or consists of, a catalytically produced polyethylene component CC which is an ethylene copolymer, preferably a multimodal ethylene copolymer, having a density of 910 kg/m$^3$ to 925 kg/m$^3$ and a $MFR_2$ of 0.5 to 2.0 g/10 min.

Preferably, the ethylene copolymer of component CC has a ratio $MFR_{21}/MFR_2$ of 13 to 30 and a MWD of 6 or less.

Preferably, the ethylene copolymer is a linear low density polyethylene (LLDPE) which are well known in the art and are produced in polymerization processes using a catalyst.

Preferably, the ethylene copolymer comprises, or consists of, a multimodal polymer of ethylene with one or more comonomers selected from alpha-olefins having from 4 to 10 carbon atoms, which has a ratio $MFR_{21}/MFR_2$ of 13 to 30 and a MWD of 6 or less.

Such multimodal ethylene copolymers are disclosed, for example, in WO 2016/083208.

The multimodal ethylene copolymer preferably has a $MFR_2$ in the range of from 0.6 to 2.5 g/10min, and particularly preferred from 1.2 to 1.8 g/10min.

Preferably, the multimodal ethylene copolymer has a density of 910 to 925 kg/m$^3$, more preferably of 913 to 922 kg/m$^3$, and particularly preferred of 915 to 920 kg/m$^3$.

The multimodal ethylene copolymer preferably has a ratio $MFR_{21}/MFR_2$ of 13 to 30, more preferably of 15 to 25.

The multimodal ethylene copolymer preferably has an MWD of 6 or less and usually more than 1, more preferably of 3.0 to 5.0.

The alpha-olefin comonomers having from 4 to 10 carbon atoms of the multimodal ethylene copolymer are preferably 1-butene and/or 1-hexene.

Preferably, the total amount of comonomers present in the multimodal ethylene copolymer is 0.5 to 10 mol%, preferably 1.0 to 8 mol%, more preferably 1.0 to 5 mol%, more preferably 1.5 to 5.0 mol% and most preferably 2.5 to 4.0 mol%.

In a particularly preferred embodiment, multimodal ethylene copolymer is a bimodal copolymer, i.e. comprises a low molecular weight and a high molecular weight component, and has a $MFR_2$ of 1.2 to 1.8 g/10 min, and/or an $MFR_5$ of 3.0 to 5.0 g/10 min and/or a $MFR_{21}$ of 20 to 40 g/10 min, and/or a density of 915 to 920 kg/m$^3$, and/or a molecular weight distribution (MWD) of 3.0 to 5.0, and/or a $M_n$ of 15 to 25 kg/mol, and/or a $M_w$ of 80 to 115 kg/mol, and/or a $MFR_{21}/MFR_2$ ratio ($FRR_{21/2}$) of 15 to 25 and/or a $MFR_{21}/MFR_5$ ratio ($FRR_{21/5}$) of 6 to 9.

In a further preferred embodiment, the ethylene copolymer of component CC comprises, or consist of, an ethylene terpolymer, more preferably a multimodal ethylene terpolymer (III).

Preferably, multimodal ethylene terpolymer (III) is an ethylene terpolymer having a density of 910 kg/m$^3$ to 925 kg/m$^3$ and a $MFR_2$ of 0.5 to 2.0 g/10 min.

Multimodal ethylene terpolymer (III) preferably comprises, or consists of, a multimodal polymer of ethylene with at least two different comonomers selected from alpha-olefins having from 4 to 10 carbon atoms, which has a ratio $MFR_{21}/MFR_2$ of 13 to 30 and a MWD of 5 or less.

Such multimodal ethylene terpolymers are disclosed, for example, in WO 2016/083208. As far as definitions (such as for the "modality" of a polymer) and production methods for these ethylene terpolymers are concerned it is referred to WO 2016/083208. Furthermore, all embodiments and preferred embodiments of such ethylene terpolymers as described in WO 2016/083208 which have a density in the range a density of 910 to 925 kg/m$^3$ are also preferred embodiments of the multimodal ethylene terpolymer (III) in the present application, whether or not explicitly described herein.

Multimodal ethylene terpolymer (III) preferably has a $MFR_2$ in the range of from 0.6 to 2.5 g/10min, and particularly preferred from 1.2 to 1.8 g/10min.

Preferably, multimodal ethylene terpolymer (III) has a density of 910 to 925 kg/m$^3$, more preferably of 913 to 922 kg/m$^3$, and particularly preferred of 915 to 920 kg/m$^3$.

Multimodal ethylene terpolymer (III) preferably has a ratio $MFR_{21}/MFR_2$ of 13 to 30, more preferably of 15 to 25.

The at least two alpha-olefin comonomers having from 4 to 10 carbon atoms of multimodal ethylene terpolymer (III) are preferably 1-butene and 1-hexene.

Preferably, the total amount of comonomers present in multimodal ethylene terpolymer (III) is 0.5 to 10 mol%, preferably 1.0 to 8 mol%, more preferably 1.0 to 5 mol%, more preferably 1.5 to 5.0 mol% and most preferably 2.5 to 4.0 mol%.

Multimodal ethylene terpolymer (III), which preferably is a bimodal terpolymer, preferably comprises, or consists of, an ethylene polymer component (A) and an ethylene polymer component (B), wherein the ethylene polymer component (A) has higher $MFR_2$ than ethylene polymer component (B).

More preferably, the ethylene polymer component (A) has $MFR_2$ of 1 to 50 g/10 min, preferably of 1 to 40 g/10 min, more preferably of 1 to 30 g/10 min, more preferably of 2 to 20 g/10 min, more preferably of 2 to 15 g/10 min, and even more preferably of 2 to 10 g/10 min.

The ratio of the $MFR_2$ of ethylene polymer component (A) to the $MFR_2$ of the ethylene polymer component (B) is 2 to 50, preferably 5 to 40, more preferably 10 to 30, more preferably 10 to 25, and still more preferably 11 to 25.

Preferably, ethylene polymer component (A) comprises a different comonomer than the ethylene polymer (B).

Preferably, ethylene polymer component (A) has lower amount (mol%) of comonomer than ethylene polymer component (B), more preferably, the ratio of [the amount (mol%) of alpha-olefin comonomer having from 4 to 10 carbon atoms comonomer present in ethylene polymer component (A)] to [the amount (mol%) of at least two alpha-olefin comonomers having from 4 to 10 carbon atoms of the final multimodal ethylene terpolymer] is of 0.10 to 0.60, preferably of 0.15 to 0.50.

Preferably, the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

Preferably, ethylene polymer component (A) has different, preferably higher, density than the density of the ethylene polymer component (B).

The density of the ethylene polymer component (A) is preferably 925 to 950 kg/m$^3$, more preferably 930 to 945 kg/m$^3$.

Preferably, multimodal ethylene terpolymer (III) comprises the ethylene polymer component (A) in an amount of 30 to 70 wt.%, preferably of 40 to 60 wt.%, more preferably of 35 to 50 wt.%, more preferably 40 to 50 wt.% and the ethylene polymer component (B) in an amount of 70 to 30 wt.%, preferably of 60 to 40 wt.%, more preferably of 50 to 65 wt.%, more preferably 50 to 60 wt.%, based on the total amount (100 wt.%) of multimodal ethylene terpolymer (III).

Most preferably, multimodal ethylene terpolymer (III) consists of the ethylene polymer components (A) and (B) as the sole polymer components. Accordingly, the split between ethylene polymer component (A) to ethylene polymer component (B) is of (30 to 70):(70 to 30) preferably of (40 to 60):(60 to 40), more preferably of (35 to 50):(65 to 50), more preferably of (40 to 50):(50 to 60).

In a particularly preferred embodiment, multimodal ethylene terpolymer (III) is a bimodal terpolymer, i.e. comprises a low molecular weight and a high molecular weight component, and has a $MFR_2$ of 1.2 to 1.8 g/10 min, and/or an $MFR_5$ of 3.0 to 5.0 g/10 min and/or a $MFR_{21}$ of 20 to 40 g/10 min, and/or a density of 915 to 920 kg/m$^3$, and/or a molecular weight distribution (MWD) of 3.0 to 5.0, and/or a $M_n$ of 15 to 25 kg/mol, and/or a $M_w$ of 80 to 115 kg/mol, and/or a

MFR$_{21}$/MFR$_2$ ratio (FRR$_{21/2}$) of 15 to 25 and/or a MFR$_{21}$/MFR$_5$ ratio (FRR$_{21/5}$) of 6 to 9.

Preferred as multimodal ethylene terpolymers (III) are also such commercially available as Anteo™ from Borealis or Borouge having the properties as required herein, especially Anteo™ FK1828 or Anteo™ FK1820.

Preferably, component CC is present in the core layer composition in an amount of 10 to 80 wt.%, more preferably of 25 to 70 wt.%, still more preferably of 40 to 65 wt.%, and most preferably of 50 to 60 wt.%.

In one embodiment, the core layer composition comprises, or preferably consist of, components BC and CC.

Preferably, all components present in the core layer composition comprise, or preferably consist of, polyethylenes.

It is preferred that in the layered polyethylene film of the invention the core layer makes up from 35 to 65 %, more preferably from 40 to 60 %, and most preferably from 45 to 55 % of the total thickness of the film.

**Inner Layer**

The layered polyethylene film of the invention further usually comprises an inner layer which is an external layer of the film on the side opposite to the outer layer.

The inner layer is designed and well suited to be laminated to further films, such as a further polyethylene film, which may be machine-direction oriented or non-oriented, PET film and/or biaxially-oriented polypropylene film (BOPP).

Accordingly, in one embodiment, the layered polyethylene film of the invention is laminated with its inner layer to (a) further polyethylene film(s), and hence the polymer resins of the formed laminate are entirely consisting of polyethylene. In this embodiment, the laminate is fully recyclable and hence sustainable laminates are formed.

Such "all-polyethylene laminate structures" are a simplification as regards presently available laminates and have potential to replace current non-recyclable PET/PE laminates which are most commonly used.

In a further embodiment, the layered polyethylene film of the invention is laminated with its inner layer to PET or BOPP. Such laminates have the benefit of cost saving because it can be switched from 3 ply laminates to 2 ply laminates.

Preferably, the inner layer composition of which the inner layer is formed comprises a component AI which is an ethylene copolymer.

Preferably, the ethylene copolymer of component AI comprises, or consists of, any one of the embodiments described for component CC herein above.

Component AI preferably is present in the inner layer composition in an amount of 50 wt.% to 95 wt. %, more preferably of 60 wt.% to 90 wt. %, and most preferably of 70 to 85 wt.%.

Furthermore, the inner layer composition preferably comprises a component BI which is a high-pressure produced LDPE having an MFR$_2$ determined according to ISO 1133 of from 0.25 to 2 g/10min and a density of 915 to 930 kg/m$^3$.

Preferably, the LDPE of component BI comprises, or consist of, any one of the embodiments described for component BO herein above.

Component BI preferably is present in the inner layer composition in an amount of 5 wt.% to 40 wt.%, more preferably of 10 wt.% to 35 wt.%, and most preferably of 15 to 30 wt.%.

Preferably, inner layer comprises, or consists of, components AI and BI in a weight ratio of from 60:40 to 95:5, preferably 70:30 to 90:10, and most preferably from 75:25 to 85:15, optionally further comprising an anti-block masterbatch, for example Polybatch FSU-105-E, in an amount of 3 wt.% or below, more preferably 2 wt.% or below.

Preferably, all polymer components present in the inner layer composition comprise, or preferably consist of, polyethylenes.

It is preferred that in the layered polyethylene film of the invention the inner layer makes up from 5 to 25 %, more preferably from 7 to 20 %, and most preferably from 8 to 15 % of the total thickness of the film.

**Sub-Skin Layer**

The layered polyethylene film according to the invention may contain one or more sub-skin layer(s).

Such sub-skin layers are intermediate layers of the film, and are, for example, present in between the outer layer and the core layer and/or between the core layer and the inner layer of the film.

If more than one sub-skin layer is present in the film of the invention the sub-skin layers may have the same or a different composition which may be selected from the preferred embodiments as described herein below.

Preferably, the sub-skin layers are made of a sub-skin layer composition which comprises a component AS which is an ethylene copolymer.

Preferably, the ethylene copolymer of component AS comprises, or consist of, the polyethylene in any one of the embodiments described for component CC herein above.

Component AS preferably is present in the sub-skin layer composition in an amount of 50 wt.% to 95 wt.%, more preferably of 60 wt.% to 90 wt.%, and most preferably of 70 to 85 wt.%.

Furthermore, the sub-skin layer composition comprises a component BS which is an ethylene copolymer.

Preferably, the ethylene copolymer of component BS comprises, or consists of, the ethylene copolymer any one of the embodiments described for component AO herein above.

Component BS preferably is present in the sub-skin layer composition in an amount of 50 wt.% to 95 wt.%, more preferably of 60 wt.% to 90 wt.%, and most preferably of 70 to 85 wt.%.

Sub-skin layer composition may comprise a combination of components AS and BS, and if so, preferably the combined amount of AS and BS is 50 wt.% to 95 wt.%, more preferably 60 wt.% to 90 wt.%, and most preferably 70 to 85 wt.%. of the total sub-skin layer composition.

Preferably, the sub-skin layer composition comprises either AS or BS.

Furthermore, the sub-skin layer composition usually comprises a component CS which is a high-pressure produced LDPE having an $MFR_2$ determined according to ISO 1133 of from 0.25 to 2 g/10min and a density of 915 to 930 $kg/m^3$.

Preferably, the LDPE of component CS comprises, or consist of, the LDPE in any one of the embodiments described for component BO herein above.

Component CS preferably is present in the inner layer composition in an amount of 5 wt.% to 40 wt.%, more preferably of 10 wt.% to 35 wt.%, and most preferably of 15 to 30 wt.%.

Preferably, the sub-skin layer composition layer comprises, or consists of, components AS and/or BS to CS in a weight ratio of from 60:40 to 95:5, preferably 70:30 to 90:10, and most preferably from 75:25 to 85:15.

Preferably, all polymer components present in the sub-skin layer composition comprise, or preferably consist of, polyethylenes.

It is preferred that in the layered polyethylene film of the invention the sub-skin layer makes up from 5 to 30 %, more preferably from 10 to 25 %, and most preferably from 12 to 20 % of the total thickness of the film. If more than one sub-skin layers are present in the film, these values apply for each of them.

The layered polyethylene film according to the invention usually has a total thickness of 20 to 75 micrometer, such as 25 to 60 micrometer or 30 to 50 micrometer.

In a preferred embodiment of the layered film of the invention the film comprises, or consists of, an outer layer, a first sub-skin layer, a core layer, a second sub-skin layer and an inner layer, in any one of the embodiments as described herein, wherein the layers are present in the film in this sequence and are adjacent to each other.

Preferably, the polymeric parts of all layers of the layered film consist of polyethylenes.

The layered polyethylene film according to the invention has good barrier properties already in the non-coated state.

Preferably, the film has a WTRV of 8.3 $g/m^2/d$ or lower, more preferably of 6.0 $g/m^2/d$ or lower determined on a non-oriented film as described herein below.

Furthermore, the film preferably has an OTR of 5500 $cm^3/m^2/d$ or lower, more preferably of 4000 $cm^3/m^2/d$ or lower determined on a non-oriented film as described herein below.

The moisture and oxygen barrier properties of the films may further be enhanced by orienting the film, e.g. in machine direction, as is clear to the skilled person.

The film of the invention has a good stiffness.

Preferably, the film of the invention has a tensile modulus in machine direction measured as described herein below of 200 MPa or more, such as 230 MPa or more.

If higher stillness is desired, it is preferred that the core layer comprises, or consists of, component AC. Then preferably a tensile modulus in machine direction of 400 MPa or higher, such as 500 MPa or higher can be reached.

Furthermore, the film of the invention has good gloss determined at 60 degree as further described herein below.

Preferably, the film has a gloss value at 60 degree of 100 or more, more preferably of 105 or more.

The present invention also relates to a process for producing a layered polyethylene film according to any one of the preceding claims wherein the layers of the film structure are co-extruded.

The different polymer components in any of the layers of the film are typically intimately mixed prior to layer formation, for example using a twin screw extruder, preferably a counter-rotating extruder or a co-rotating extruder. Then, the blends are converted into a coextruded film structure. Preferably, the blends are converted into a coextruded film structure on a blown-film line.

In order to manufacture such multilayer films according to the invention, normally at least two polymer melt streams are simultaneously extruded (i.e. coextruded) through a multi-channel tubular, annular or circular die to form a tube which is blown-up, inflated and/or cooled with air (or a combination of gases) to form a film. The manufacture of blown film is a well-known process.

The present invention also relates to a barrier coated polyethylene film comprising the layered polyethylene film according to any one of the embodiments as described herein and a barrier coating layer which has been formed on the outer layer of the layered polyethylene film and to a process for forming a barrier coated film wherein a barrier coating layer is formed on the outer layer of a layered polyethylene film according to any one of the embodiments as described herein.

Coatings and barrier coatings are well-known processes, in which an external layer of the film is coated with a thin barrier material layer. By definition, barrier coatings provide barrier properties, preferably against water vapor and gases. They are used when the desired function is to prevent water vapor or gases (such as oxygen) from migrating into and through a film or laminate.

Preferably, barrier coating layers are applied by a vapor depositing technique. Generally, vapor deposition coating of a barrier layer onto a polymer film is carried out by means of a continuous method of physical or chemical vapor deposition. Various coating layers may be applied by this type of methods.

According to the invention, preferred barrier coating layers are inorganic barrier coating layers.

Preferably, the polyethylene film comprises a barrier coating layer on the outer layer, which comprises, or consists of, a barrier coating component which is a metal and/or a metal oxide.

Preferably, the barrier coating component is selected from the group consisting of the metals Al, Au, Ag, Cr, Zn, Ti, Si and Cu and oxides of these metals, and mixtures thereof. The most preferred metal is aluminum (Al). The most preferred metal oxide is an aluminum oxide ($AlO_x$), such as $Al_2O_3$.

Generally, the thickness of such vapor deposited coatings may vary between 5 and 200 nm. Below 5 nm the barrier properties may be too low to be useful and above 200 nm, the coating is less flexible and, thus, more prone to cracking when applied onto a flexible substrate.

Preferably the thickness of such vapor deposited coatings is in the range of 5 to 100 nm, more preferably in the range of 8 to 50 nm.

Preferably, the barrier coated polyethylene film of the invention has a water vapor transmission rate (WTRV) of 1.0 g/m$^2$/d or lower, more preferably of 0.82 g/m$^2$/d or lower, and most preferably of 0.80 g/m$^2$/d, determined as described herein below.

Furthermore, the barrier coated polyethylene film of the invention has an oxygen transmission rate (OTR) of 150 cm$^3$/m$^2$/d or lower determined as described herein below.

The barrier coated, preferably metallized, polyethylene film of the invention has an excellent coating adhesion and surface energy retention, as shown in the tape test described herein below, and as is can be seen from the decay of the surface energy as expressed in dyn/cm per day, respectively.

Preferably, the barrier coated, preferably metallized, polyethylene film after 14 days retains a surface energy of 33 dyn/cm or more determined as described herein below.

Preferably, the barrier coated, preferably metallized, polyethylene film after 21 days retains a surface energy of 30 dyn/cm or more, more preferably of 35 dyn/cm determined as described herein below.

The present invention further relates to a laminate and an article comprising the non-coated or the barrier coated polyethylene film according to any one of the embodiments as described herein.

Preferably, in the laminate or article, the non-coated or barrier coated polyethylene film is laminated to another layer.

In one embodiment, the outer layer (the coated or non-coated, preferably coated outer layer) of the polyethylene film is laminated to another layer.

In another embodiment, the inner layer of the polyethylene film is laminated to another layer.

Lamination may be affected in any conventional lamination device using conventional lamination methods, such as adhesive lamination, including both solvent-based and solvent-less adhesive lamination using any conventional, commercially available adhesive, such as LA7825 (supplied by Henkel Corporation). Optionally, the adhesive may be mixed with a hardener, e.g. in a ratio of adhesive to hardener of 2:1. Lamination may alternatively be carried out without any adhesive, as sandwich lamination with or without a melt web, which may be pressed between the substrates. Such melt web may be any conventional melt web material based on polyethylene, such as LDPE. Lamination may further be performed via extrusion coating technique. All these lamination methods are well known in the art and described in literature.

In one embodiment of the laminate or article, the polyethylene film is laminated via one of its external layers to an external layer of a substrate film, i.e. the "another layer" being an external layer of a substrate film. In this embodiment, the polyolefin preferably serves as a sealant film, i.e. a film that comprises a sealing layer, which is a layer that promotes bonding to another film or layer. Preferably, the inner layer of the sealant film is the sealing layer. The substrate film is preferably used as support and/or to provide stiffness, it may be an oriented (preferably machine-oriented) or a non-oriented film, a PE film, a PET film or a biaxially-oriented polypropylene film (BOPP).

In one embodiment, the outer layer (the coated or non-coated, preferably coated outer layer) of the polyethylene film is laminated to an external layer of a substrate film.

In another embodiment, the inner layer of the polyethylene film is laminated to an external layer of a substrate film.

In a preferred embodiment, the coated outer layer of the polyethylene film is laminated to an external layer, preferably the outer layer, of a substrate film.

In one embodiment, the laminate or article of the invention is formed by laminating the layered polyethylene film of the invention to (a) further polyethylene film(s), and hence the polymer resins of the formed laminate are entirely consisting of polyethylene. In this embodiment, all polymeric components of the laminate or article consist of polyethylenes and hence the laminate/article is fully recyclable and sustainable laminates/articles are formed.

Such "all-polyethylene laminate structures" are a simplification as regards presently available laminates and have potential to replace current non-recyclable PET/PE laminates which are most commonly used.

In a further embodiment, the laminate or article of the invention is formed by laminating the layered polyethylene film of the invention to PET or BOPP. Such laminates have the benefit of cost saving because it can be switched from 3 ply laminates to 2 ply laminates.

The laminate or article preferably has a water vapor transmission rate of 0.5 $g/m^2/d$ or lower determined as described in the specification and/or has an oxygen transmission rate of 30 $cm^3/m^2/d$ or lower determined as described in the specification.

Preferably, the article is a pouch or a bag.

Finally, the present invention relates to the use of an article according to any one of the embodiments described herein for packaging of articles.

In the following, the invention will further be illustrated by way of examples which refer to the following figures which show:

Figure 1:   Tensile modulus of polyethylene film samples

Figure 2:   Surface energy (dyn/cm) of metallized films over 3 weeks' time

Figure 3:   Metal adhesion results of metallized films

Figure 4:   Xylene Solubles (XS) of polyethylene composition used for outer (metallized) film layer

**Measurement and Determination Methods**

**a)** Measurement of melt flow rate MFR

The melt flow rate (MFR) was determined according to ISO 1133 and was indicated in g/10 min. The higher the melt flow rate, the lower the viscosity of the polymer. The MFR is determined at 190 °C for polyethylene and at a loading of 2.16 kg ($MFR_2$), 5.00 kg ($MFR_5$) or 21.6 kg ($MFR_{21}$).

The quantity FRR (flow rate ratio) is an indication of molecular weight distribution and denotes the ratio of flow rates at different loadings. Thus, $FRR_{21/5}$ denotes the value of $MFR_{21}/MFR_5$ and $FRR_{21/2}$ denotes the value of $MFR_{21}/MFR_2$.

**b)** Density

Density of the polymer was measured according to ISO 1183-1:2004 (method A) on compression moulded specimen prepared according to EN ISO 1872-2 (Feb 2007) and is given in $kg/m^3$.

**c)** GPC

*1) GPC conventional method*

Molecular weight averages ($M_z$, $M_w$ and $M_n$), molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i x M_i)}{\sum_{i=1}^{N} A_i} \quad (2)$$

$$M_z = \frac{\sum_{i=1}^{N}(A_i \; x \; M_i^2)}{\sum_{i=1}^{N}(A_i x M_i)} \; (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As mobile phase 1,2,4-trichlorobenzene (TCB) stabilized with 250 mg/L 2,6-Di tert butyl-4-methylphenol) was used. The chromatographic system was operated at column temperature of 160 °C and detector at 160 °C and at a constant flow rate of 1 mL/min. 200 $\mu$L of sample solution was injected per analysis. Data collection was performed using either Agilent Cirrus software version 3.3 or PolymerChar GPC-IR control software.

The column set was calibrated using 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark-Houwink equation and the following Mark-Houwink constants:

$$K_{PS} = 19 \text{ x } 10^{-3} \text{ mL/g}, \quad \alpha_{PS} = 0.655$$

$$K_{PE} = 39 \text{ x } 10^{-3} \text{ mL/g}, \quad \alpha_{PE} = 0.725$$

A third order polynomial fit was used to fit the calibration data.

All samples were prepared in the concentration range of around 1 mg/ml and dissolved at 160 °C for 3 (three) hours for PE in fresh distilled TCB stabilized with 250 ppm Irgafos168 under continuous gentle shaking

*(2) GPC viscosity method*

Molecular weight averages ($M_z$, $M_w$ and $M_n$), Molecular weight distribution (MWD) of LDPE is measured by GPC-viscosity method using universal calibration. Molecular weight averages ($M_w$, $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-4 2019. A PL 220 (Polymer Laboratories) GPC equipped with an IR4 infrared detector, an online four capillary bridge viscometer (PL-BV 400-HT) was used. 3x Olexis and 1x Olexis Guard columns from Polymer Laboratories as stationary phase and 1,2,4-trichlorobenzene (TCB, stabilized with 250 mg/L 2,6-Di tert butyl-4-methyl-phenol) as mobile phase at 160 °C and at a constant flow rate of 1 mL/min was applied. 200 $\mu$L of sample solution were injected per analysis. The corresponding detector constant of the viscometer as well as the inter-detector delay volumes were determined with a narrow PS standard (MWD = 1.01) with a molar mass of 132900 g/mol and an intrinsic viscosity of 0.4789 dl/g. The detector constant of the IR4 detector was determined using NIST1475a with dn/dc of 0.094 cm$^3$/g.

The column set was calibrated using universal calibration (according to ISO 16014-2:2019) with at least 15 narrow MWD polystyrene (PS) standards in the range of 0.5 kg/mol to 11 600 kg/mol. The corresponded intrinsic viscosities of the PS standards were calculated from their corresponding concentration (IR4), online viscometer signals, and determined detector constants for polystyrene. For low molecular weight PS with a molar mass below 3000 g/mol the initial weight out concentration is used, due to end group effects in the IR detector.

The molecular weight of the sample ($M_2$) at each chromatographic slice using the universal calibration approach can be calculated by following correlation:

$$logM_1[\eta_1] = V_R = logM_2[\eta_2]$$

with: $M_1$ Molar mass of PS
$\eta_1$ intrinsic viscosity of the PS
$M_2$ Molar mass of sample
$\eta_2$ intrinsic viscosity of sample
$V_R$ Retention volume

All data processing and calculation was performed using the Cirrus Multi-Offline SEC-Software Version 3.2 (Polymer Laboratories a Varian inc. Company).

All samples were prepared by dissolving 5.0 - 9.0 mg of polymer in 8 mL (at 160 °C) of stabilized TCB (same as mobile phase) for 2.5 hours for PP or 3 hours for PE at max. 160 °C under continuous gentle shaking.

**d)** Comonomer content

The comonomer content was measured as indicated in WO2019081611, pages 31 to 34.

**e)** Mechanical Properties

Tensile Modulus and Tensile Strength

Tensile modulus in machine direction (MD) and in transverse direction (TD) were determined as 1 % secant modulus with 1 mm/min test speed and 100 mm gauge length according to ISO 527-3.

Tensile stress at break (also known as tensile strength) in machine direction (MD) and in transverse direction (TD) were determined according to ISO 527-3 with specimen Type 2 with 50 mm gauge length and 200 mm/min test speed.

**f)** Xylene Solubles

The xylene soluble (XS) fraction as defined and described in the present invention is determined in line with ISO 16152 as follows: 2.0 g of the polymer were dissolved in 250 ml p-xylene at 135 °C under agitation. After 30 minutes, the solution was allowed to cool for 15 minutes at ambient temperature and then allowed to settle for 30 minutes at 25 +/- 0.5 °C. The solution was filtered with filter paper into two 100 ml flasks. The solution from the first 100 ml vessel was evaporated in nitrogen flow and the residue dried under vacuum at 110 °C until constant weight is reached (approximately three hours). The xylene soluble fraction (percent) can then be determined as follows:

$XS\% = (100 * m * V_0)/(m_0 * v)$; $m_0$ = initial polymer amount (g); $m$ = weight of residue (g); $V_0$ = initial volume (ml); $v$ = volume of analyzed sample (ml).

**g)** Optical Properties

Gloss, clarity and haze as measures for the optical appearance of the films were determined according to ASTM D2457 (gloss) and ASTM D1003 (haze and clarity). Gloss was determined according to ISO 2813 (ASTM D2457) at an angle of 20°, 60° or 85° accordingly.

**h)** Barrier Properties

Water vapor transmission rates were determined under tropical conditions (38 °C; 90 % RH) according to ISO 15106-2.

Oxygen transmission rates were determined according to ISO 15105-1 under standard conditions (23 °C; 100 % O2; 0 % RH).

**i)** Surface Tension Retention

Surface Tension was measured according to ASTM D-2578.

**j)** Metal Adhesion

Metal adhesion is measured using a tape test. A sample of the metallized substrate is placed on a smooth, flat surface, with the metallized layer facing up. Subsequently, 6 in (15.24 cm) of Scotch™ 610 adhesive tape is applied to the surface, and smoothed with the thumb and forefinger to ensure good contact. To facilitate separation, one end of the tape should be doubled over. Then, while holding the sample with one hand, the other hand peels the tape back approximately 180° in one smooth movement. The test substrate is afterwards examined for metal removal, and the used tape for metal transfer, using a strong backlight.

**Examples**

Three comparative films (Comparative Examples CE1, CE2, CE3) and two films in accordance with the invention (Inventive examples IE1, IE2) were produced as five-layer blown films. Outer layer and inner (sealant) layers (layers A and E) had a thickness of 10 % each; sub-skin layers of 15 % each and core layer of 50 % of the total film thickness which was about 35 micrometers.

Table 1 provides the structures of the comparative and inventive films, wherein layer A denotes the external layer corresponding to the film layer used for vacuum metallization (outer layer). Layer B denotes the first sub-skin layer in between metallization outer layer and core layer (layer C); layer D denotes the second skin layer between core player C and the inner (sealant) layer E.

Table 1:

| Sample | Outer Layer (metallized layer) | Sub-skin Layer 1 | Core Layer | Sub-skin Layer 2 | Inner Layer (sealant layer) |
|---|---|---|---|---|---|
| Film layer | Layer A | Layer B | Layer C | Layer D | Layer E |
| Thickness layer ratio | 10% | 15% | 50% | 15% | 10% |
| Layer thickness ($\mu$m) | 3.5 | 5.5 | 17.5 | 5.5 | 3.5 |
| **Comparative example 1** (CE1) | 80% FK1820 + 20% FT5230 | 80% FK1820 + 20%FT5230 | 55% FK1820 + 45% FX1001 | 80% FK1820 + 20% FT5230 | 80% FK1820 + 19% FT5230 + 1% Antiblock MB |
| **Comparative example 2** (CE2) | 100% FT5230 | 100%FT5230 | 55% FK1820 + 45% FX1001 | 80% FK1820 + 20% FT5230 | 80% FK1820 + 19% FT5230 + 1% Antiblock MB |
| **Comparative example 3** (CE3) | 80% FK1820 + 20% FT5230 | 80% FK1820 + 20%FT5230 | 55% FK1820 + 45% FX1001 | 80% FK1820 + 20% FT5230 | 80% FK1828 + 19% FT5230 + 1% Antiblock MB |
| **Inventive example 1** (IE1) | 80% FK2715 + 20% FT5230 | 80% FK1820 + 20%FT5230 | 55% FK1820 + 45% FX1001 | 80% FK1820 + 20% FT5230 | 80% FK1820 + 19% FT5230 + 1% Antiblock MB |
| **Inventive example 2** (IE2) | 80% FK2715 + 20% FT5230 | 80% FK2715 + 20%FT5230 | 100% FB5600 | 80% FK2715 + 20% FT5230 | 80% FK1820 + 19% FT5230 + 1% Antiblock MB |

The polymers used for making the layered film structures of the invention and of the comparative examples are given in Table 2 below.

Table 2:

| Resin name | Producer | Type | $MFR_2$ (g/10min) | $MFR_{21}$ (g/10min) | Density (kg/m$^3$) | MWD | XS (wt%) |
|---|---|---|---|---|---|---|---|
| Anteo FK2715 | Borouge | Bimodal 1-butene, 1-hexene ethylene terpolymer | 1.3 | 25 | 927 | 4.0 | 0.85 |
| Anteo FK1820 | Borouge | Bimodal | 1.5 | 30 | 918 | 4.0 | 1.9 |
| Borstar FB5600 | Borouge | Bimodal ethylene copolymer | 0.7 | n.a | 960 | 13 | 1.0 |
| LDPE FT5230 | Borealis/Borouge | Tubular LDPE | 0.75 | 60 | 923 | 7 | 1.5 |
| Borshape FX1001 | Borealis | Bimodal ethylene terpolymer | - | 20 | 931 | 12 | 10 |

(continued)

| Resin name | Producer | Type | MFR$_2$ (g/10min) | MFR$_{21}$ (g/10min) | Density (kg/m$^3$) | MWD | XS (wt%) |
|---|---|---|---|---|---|---|---|
| Borcoat ME0420 | Borealis | maleic anhydride grafted polyethylene | 1.2 | 70 | 934 | 5 | 14 |

All blown films were produced on large scale blown film equipment. As mentioned, five-layer blown films were produced having an A/B/C/D/E structure with the layers further outlined as in Table 1. The 5-layer blown films were produced using an Alpine-make blown film line with five extruders. The performance of films were analysed from 35 μm blown films produced at the below process operating conditions with die-gap of 1.8 mm, lower neck-height and blow up ratio of 3.0:1. The process conditions are given separately.

The blown film line had the properties listed in Table 3.

Table 3:

| | |
|---|---|
| Die diameters | 300 mm |
| Die gap | 1.8 mm |
| Bubble cooling | Internal bubble cooling (IBC) |
| Cooling air temperature | 22 °C |
| Corona treatment | 48 dyn/cm |

The temperature profile of the blown film line, i.e. the temperatures used for different locations of the blown film lines, were as given in Table 4.

Table 4. Blown film production temperatures in °C.

CE1

| Layer | Extruder zone 1 | Extruder zone 2 | Extruder zone 3 | Extruder zone 4 | Extruder zone 5 | Extruder zone 6 | Post-extruder zone 7 | Post-extruder zone 8 |
|---|---|---|---|---|---|---|---|---|
| Outer layer (A) | 190 | 190 | 190 | 190 | 190 | 190 | 190 | - |
| Sub-skin layer 1 (B) | 190 | 190 | 190 | 190 | 190 | 190 | 190 | - |
| Core layer (C) | 40 | 220 | 220 | 220 | 220 | 230 | 230 | 230 |
| Sub-skin layer 2 (D) | 190 | 190 | 190 | 190 | 190 | 190 | 190 | - |
| Inner layer (E) | 190 | 190 | 190 | 190 | 190 | 190 | 190 | - |

CE2

| Layer | Extruder zone 1 | Extruder zone 2 | Extruder zone 3 | Extruder zone 4 | Extruder zone 5 | Extruder zone 6 | Post-extruder zone 7 | Post-extruder zone 8 |
|---|---|---|---|---|---|---|---|---|
| Outer layer (A) | 180 | 190 | 190 | 190 | 190 | 180 | 190 | - |
| Sub-skin layer 1 (B) | 180 | 190 | 190 | 190 | 190 | 190 | 190 | - |
| Core layer (C) | 40 | 220 | 220 | 220 | 220 | 230 | 230 | 230 |
| Sub-skin layer 2 (D) | 190 | 190 | 190 | 190 | 190 | 190 | 190 | - |
| Inner layer (E) | 190 | 190 | 190 | 190 | 190 | 190 | 190 | - |

CE3

| Layer | Extruder zone 1 | Extruder zone 2 | Extruder zone 3 | Extruder zone 4 | Extruder zone 5 | Extruder zone 6 | Post-extruder zone 7 | Post-extruder zone 8 |
|---|---|---|---|---|---|---|---|---|
| Outer layer (A) | 190 | 190 | 190 | 190 | 190 | 180 | 190 | - |
| Sub-skin layer1 (B) | 180 | 190 | 190 | 190 | 190 | 190 | 190 | - |
| Core layer (C) | 210 | 210 | 210 | 210 | 210 | 220 | 220 | 220 |
| Sub-skin layer2 (D) | 190 | 190 | 190 | 190 | 190 | 190 | 190 | - |
| Inner layer (E) | 190 | 190 | 190 | 190 | 190 | 190 | 190 | - |

IE1

| Layer | Extruder zone 1 | Extruder zone 2 | Extruder zone 3 | Extruder zone 4 | Extruder zone 5 | Extruder zone 6 | Post-extruder zone 7 | Post-extruder zone 8 |
|---|---|---|---|---|---|---|---|---|
| Outer layer (A) | 210 | 210 | 210 | 210 | 210 | 220 | 220 | - |
| Sub-skin layer1 (B) | 210 | 210 | 210 | 210 | 210 | 220 | 220 | - |
| Core layer (C) | 40 | 210 | 210 | 210 | 210 | 220 | 220 | 220 |
| Sub-skin layer2 (D) | 210 | 210 | 210 | 210 | 210 | 220 | 220 | - |
| Inner layer (E) | 210 | 210 | 210 | 210 | 210 | 220 | 220 | - |

IE2

| Layer | Extruder zone 1 | Extruder zone 2 | Extruder zone 3 | Extruder zone 4 | Extruder zone 5 | Extruder zone 6 | Post-extruder zone 7 | Post-extruder zone 8 |
|---|---|---|---|---|---|---|---|---|
| Outer layer (A) | 210 | 210 | 210 | 210 | 210 | 220 | 220 | - |
| Sub-skin layer1 (B) | 210 | 210 | 210 | 210 | 210 | 220 | 220 | - |
| Core layer (C) | 40 | 210 | 210 | 210 | 210 | 220 | 220 | 220 |
| Sub-skin layer2 (D) | 210 | 210 | 210 | 210 | 210 | 220 | 220 | - |
| Inner layer (E) | 210 | 210 | 210 | 210 | 210 | 220 | 220 | - |

All the important film properties and overall performance are summarised below.

**Properties of films before coating:**

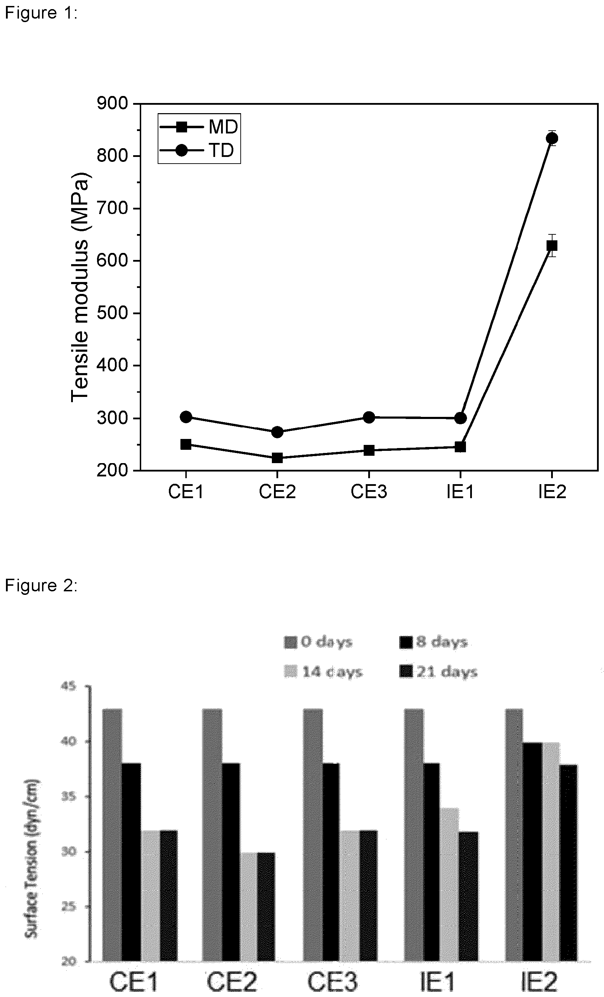

As shown in Figure 1 and Table 5 below, inventive examples showed very good stiffness and optical properties (gloss) compared to all comparative examples.

**Film tensile modulus (1% secant modulus)**

Referring to Figure 1, tensile modulus values reported for inventive example IE1 is comparable to those of the other examples before coating.

For the second inventive example IE2, tensile modulus in MD of 620 MPa is achieved by utilizing HDPE in the core layer and maximizing Anteo FK2715 in both sub-skin layers.

**Optical properties (gloss)**

High gloss values of the metallized surface is one of the key requirement in the market. Referring to Table 5 below, both inventive examples have excellent gloss before coating.

High gloss values of the barrier coated, i.e. aluminum-coated, surface is obtained after the coating steps and all samples have excellent gloss. All barrier coated (metallized) films, which were produced according to the procedures as described herein below, exhibited gloss at 60° more than 700 except CE3.

**Table 5.** Gloss at 60° of films before and after metallization

| Designation | Metallization layer (compositions in wt%) | Gloss at (60 degree) non-metallized films | Gloss at 60 degree metallized films |
|---|---|---|---|
| CE1 | 80% FK1820 + 20% FT5230 | 115 | 807 |
| CE2 | 100% FT5230 | 101 | 687 |
| CE3 | 80% FK1820 + 20% FT5230 | 120 | 798 |
| IE1 | 80% FK2715 + 20% FT5230 | 115 | 740 |
| IE2 | 80% FK2715 + 20% FT5230 (HDPE core) | 106 | 753 |

**Metallization process:**

The multi-layered films of the comparative and inventive examples were metallized with aluminum using a plasma metallizer obtaining an optical density of 2.3. The metallization of the outer layer was done after using a light plasma pre-treatment and metallization was performed by a physical vapor deposition process, the metal is heated and evaporated under vacuum and the metal then condenses on the outer layer, resulting in a layer of about 10-20 nm.

After metallization of PE films, lower decay of surface energy or higher retention of surface energy can indicate the ease of further laminating the metallized film with another substrate without requiring the usage of a surface treatment or a primer.

**Metallized film properties:**

**Surface tension retention (dyne decay) of metallized PE film:**

Surface tension retention of the metallized polyethylene films or decay of surface energy was measured with time intervals of 1 week after metallization.

A clear degradation of the surface energy on the metal side for several of the PE films was observed. As shown in Figure 2, all examples are suitable for converting after 8 days of metallization without requiring the usage of a further surface treatment, however surface tension already below 36 dyn/cm after 14 days from metallization.

After about 3 weeks, IE2 maintained an even higher level of surface energy; less than 10% decay compared to the original values.

**Metal adhesion:**

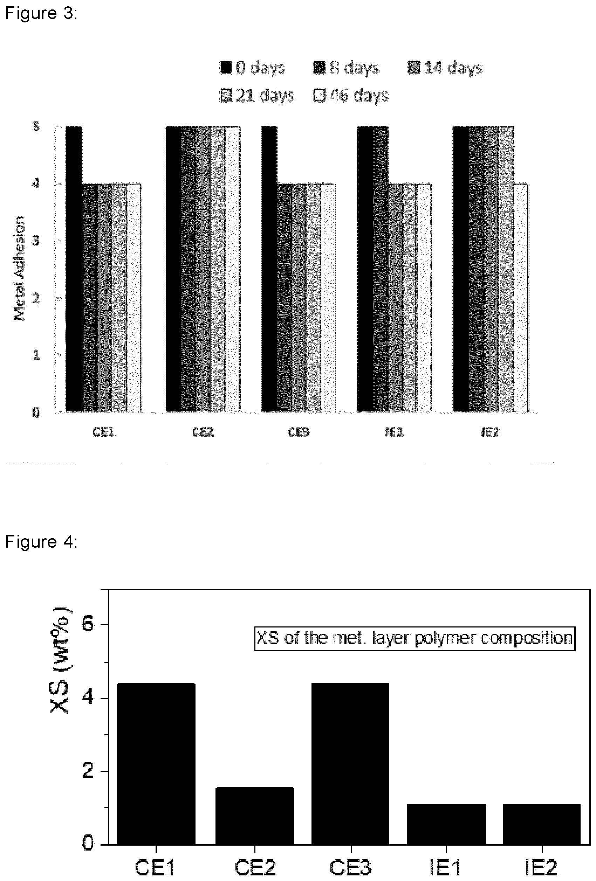

As shown in Figure 3 and Table 7 below, all the film examples were tested for metal adhesion till 46 days after metallization was done. The metal adhesion was measured according to the "tape test" procedure described above. The table is providing the ranking based on the observations:

**Table 6.** Metal adhesion ranking scheme.

| Maximum dimensions of delaminated metal | Number of delaminated | Ranking | Evaluation | QC passed |
|---|---|---|---|---|
| surface | areas | | | |
| | Zero | 5 | Very good | Yes |
| 0.1 mm | Less than 10 points | 4 | Good | Yes |
| 0.1 mm | Less than 50 points | 3 | Limit | No/further testing recommended |
| 0.1 mm | More than 100 points | 1 | Bad | No |
| 0.2 mm | Less than 100 points | 2 | Limit | No |
| > 0.2 mm | | 1 | Bad | No |

**Table 7.** Metal adhesion results of all metallized films. Layer compositions in wt. %.

| | Days from production of metallized film | 0 day | 8 days | 14 days | 21 days | 46 days |
|---|---|---|---|---|---|---|
| Film code | Metallized layer | | | | | |
| CE1 | 80% FK1820 + 20% FT5230 | 5/5 | 4/5 | 4/5 | 4/5 | 4/5 |
| CE2 | FT5230 | 5/5 | 5/5 | 5/5 | 5/5 | 5/5 |
| CE3 | 80% FK1820 + 20% FT5230 | 5/5 | 4/5 | 4/5 | 4/5 | 4/5 |
| IE1 | 80% FK2715 + 20% FT5230 | 5/5 | 5/5 | 4/5 | 4/5 | 4/5 |
| IE2 | 80% FK2715 + 20% FT5230 | 5/5 | 5/5 | 5/5 | 5/5 | 4/5 |

The results of Table 7 show that few of the examples (like CE2, and IE2) are having specifically excellent metal adhesion after 3-weeks of metallization. Overall, the metal adhesion remained quite stable and acceptable over 6-7 weeks timeline for all these metallized film examples, both the comparative as the inventive examples.

**Xylene Solubles**

The xylene solubles at 25 °C of the polymer composition used in the outer film layer (on which metallization occurs) were measured and reported in Figure 4. From the Figure 4, it is clearly visible that both IE1 and IE2 have significant lower xylene solubles (~1 wt%) on polymer composition/blends used in the outer film layer compared to all other examples.

**Film barrier performance (WVTR and OTR)**

Both water vapor transmission rate - WVTR (38 °C; 90% RH) and oxygen transmission rate - OTR (23 °C; 100 % $O_2$; 0 % RH) were measured on the films before metallization (non-metallized PE films) and after metallization (i.e. metallized PE films). Significant improvement of WVTR and OTR reported with metallized PE film over respective non-metallized film samples, as expected.

**Table 8.** Barrier properties of PE films (before and after metallization).

| Sample | Metallized layer | Metallized PE films | | Non-metallized PE films | |
|---|---|---|---|---|---|
| | | WVTR ($g/m^2/d$) | OTR ($cm^3/m^2/d$) | WVTR ($g/m^2/d$) | OTR ($cm^3/m^2/d$) |
| CE1 | FK1820 + 20% LDPE | 1.60 | >200 | 8.9 | 5400 |
| CE2 | FT5230 | 2.26 | >200 | 8.4 | 5300 |
| CE3 | FK1820 + 20% LDPE | 2.50 | >200 | 8.6 | 5350 |
| IE1 | FK2715 + 20% LDPE | **0.76** | 100 | 8.2 | 5100 |

(continued)

| Sample | Metallized layer | Metallized PE films | | Non-metallized PE films | |
|---|---|---|---|---|---|
| | | WVTR (g/m$^2$/d) | OTR (cm$^3$/m$^2$/d) | WVTR (g/m$^2$/d) | OTR (cm$^3$/m$^2$/d) |
| IE2 | FK2715 + 20% LDPE | **0.62** | 125 | 4.4 | 2300 |

Overall, the inventive PE film samples IE1 and IE2 provide very good barrier properties which are better than the barrier properties of the comparative examples, both in non-metallized as in metallized state. These results are achieved with use of compositions for the outer layer of the films having decreased XS content, as can be seen from Figure 4.

**Claims**

1.  A layered polyethylene film comprising an outer layer for barrier coating made of an outer layer composition,

    an inner layer which is an external layer of the film on the side opposite to the outer layer, wherein the inner layer is made of an inner layer composition; and
    a core layer, which is present as an intermediate layer in between the outer and inner layer of the film, wherein the core layer is made of a core layer composition,
    wherein the outer layer composition comprises

    a) a catalytically produced polyethylene component AO which is an ethylene copolymer having an MFR$_2$ determined according to ISO 1133 of from 0.5 to 10 g/10min and a density of 920 to 935 kg/m$^3$, and component AO is present in the outer layer composition in an amount of at least 70 wt.%,

    wherein the outer layer composition has xylene soluble (XS) fraction determined according to ISO 16152 of 2 wt.% or less, and
    all polymer components present in the inner layer composition and in the core layer composition comprise polyethylenes.

2.  Layered polyethylene film according to claim 1 wherein the outer layer composition further comprises
    b) a high-pressure produced polyethylene component BO which is an LDPE having an MFR$_2$ determined according to ISO 1133 of from 0.25 to 2 g/10min and a density of 915 to 930 kg/m$^3$.

3.  Layered polyethylene film according to claim 2 wherein component BO is present in the outer layer composition in an amount of from 5 to 40 wt.%, based on the total weight of the outer layer composition.

4.  Layered polyethylene film according to any one of the preceding claims wherein component AO has a ratio MFR$_{21}$/MFR$_2$ determined according to ISO 1133 of 13 to 30 and an MWD determined according to the GPC conventional method as described in the specification of 5 or less.

5.  Layered polyethylene film according to any one of the preceding claims wherein component AO is a multimodal ethylene terpolymer (I), wherein the comonomers are preferably selected from alpha-olefins having from 4 to 10 carbon atoms.

6.  Layered polyethylene film according to any one of the preceding claims wherein the film comprises a core layer made of a core layer composition which comprises a catalytically produced polyethylene component AC having an MFR$_2$ determined according to ISO 1133 of from 0.2 to 2 g/10min and a density of from 950 to 970 kg/m$^3$ and/or comprises a catalytically produced polyethylene component BC which is an ethylene copolymer, preferably an ethylene terpolymer (II), having a melt flow rate MFR$_5$ determined according to ISO 1133 of 0.6 to 4 g/10min and a density of 928 to 940 kg/m$^3$, and/or comprises a catalytically produced polyethylene component CC which is an ethylene copolymer, preferably a multimodal ethylene copolymer, having a density of 910 kg/m$^3$ to 925 kg/m$^3$ and an MFR$_2$ determined according to ISO 1133 of 0.5 to 2.0 g/10 min.

7.  Layered polyethylene film according to any one of the preceding claims wherein the film comprises an inner layer made of an inner layer composition which comprises a catalytically produced polyethylene component AI which is an ethylene copolymer, preferably a multimodal ethylene copolymer, having a density of 910 kg/m$^3$ to 925 kg/m$^3$ and a

MFR$_2$ determined according to ISO 1133 of 0.5 to 2.0 g/10 min and/or a component BI which is a high-pressure produced LDPE having an MFR$_2$ determined according to ISO 1133 of from 0.25 to 2 g/10min and a density of 915 to 930 kg/m$^3$.

8. Layered polyethylene film according to any one of the preceding claims wherein the film comprises one or more sub-skin layer(s) made of a sub-skin layer composition which comprises a catalytically produced polyethylene component AS which is an ethylene copolymer, preferably a multimodal ethylene copolymer, having a density of 910 kg/m$^3$ to 925 kg/m$^3$ and an MFR$_2$ determined according to ISO 1133 of 0.5 to 2.0 g/10 min and/or comprises a catalytically produced component BS which is an ethylene copolymer having an MFR$_2$ determined according to ISO 1133 of from 0.5 to 10 g/10min and a density of 920 to 935 kg/m$^3$ and/or comprises a component CS which is a high-pressure produced LDPE having an MFR$_2$ determined according to ISO 1133 of from 0.25 to 2 g/10min and a density of 915 to 930 kg/m$^3$.

9. Layered polyethylene film according to any one of the preceding claims wherein the film has a water vapor transmission rate (38 °C; 90 % RH) determined on a non-oriented film according to ISO 15106-2 of 8.3 g/m$^2$/d or lower, preferably of 6.0 g/m$^2$/d or lower, and/or has an oxygen transmission rate (23 °C; 100 % O$_2$; 0 % RH)[5] determined on a non-oriented film according to ISO 15105-1 of 5500 cm$^3$/m$^2$/d or lower, preferably of 4000 cm$^3$/m$^2$/d or lower.

10. A process for producing a film according to any one of the preceding claims wherein the layers of the film are co-extruded.

11. A process for forming a barrier coated film wherein a barrier coating layer is formed on the outer layer of a layered polyethylene film according to any one of claims 1 to 9.

12. A barrier coated polyethylene film comprising the layered polyethylene film according to any one of the preceding claims and a barrier coating layer, which has been formed on the outer layer of the layered polyethylene film, wherein preferably the barrier coated polyethylene film has a water vapor transmission rate (38 °C; 90 % RH) determined according to ISO 15106-2 of 1.0 g/m$^2$/d or lower, and/or has an oxygen transmission rate (23 °C; 100 % O$_2$; 0 % RH) determined according to ISO 15105-1 of 150 cm$^3$/m$^2$/d or lower.

13. A laminate or an article comprising the barrier coated polyethylene film according to claim 12, preferably a laminate or an article wherein the barrier coated polyethylene film is laminated to another layer.

14. Laminate or article according to claim 13 wherein the laminate or the article has a water vapor transmission rate (38 °C; 90 % RH) determined according to ISO 15106-2 of 0.5 g/m$^2$/d or lower, and/or has an oxygen transmission rate (23 °C; 100 % O$_2$; 0 % RH) determined according to ISO 15105-1 of 30 cm$^3$/m$^2$/d or lower, and wherein the article preferably is a pouch or a bag.

15. Use of the article according to claim 14 for packaging of articles.

**Patentansprüche**

1. Geschichtete Polyethylenfolie mit einer äußeren Schicht für eine Barrierebeschichtung, die aus einer Äußere-Schicht-Zusammensetzung ausgebildet ist,

eine innere Schicht, die eine externe Schicht der Folie auf der zu der äußeren Schicht gegenüberliegenden Seite ist, wobei die innere Schicht aus einer Innere-Schicht-Zusammensetzung ausgebildet ist, und
eine Kernschicht, die als eine Zwischenschicht zwischen der äußeren und der inneren Schicht der Folie vorgesehen ist, wobei die Kernschicht aus einer Kernschicht-Zusammensetzung ausgebildet ist,
wobei die Äußere-Schicht-Zusammensetzung aufweist:

a) eine katalytisch erzeugte Polyethylen-Komponente AO, die ein Ethylen-Copolymer mit einer Schmelz-flussrate (MFR$_2$), bestimmt gemäß ISO 1133, von 0,5 bis 10 g/10 min und einer Dichte von 920 bis 935 kg/m$^3$ ist, wobei die Komponente AO in der Äußere-Schicht-Zusammensetzung mit einem Anteil von wenigstens 70 Gewichtsprozent vorgesehen ist,

wobei die Äußere-Schicht-Zusammensetzung eine Xylen-lösliche (XS)-Fraktion, bestimmt gemäß ISO 16152, von 2 Gewichtsprozent oder weniger aufweist, und
wobei alle Polymerkomponenten in der Innere-Schicht-Zusammensetzung und in der Kernschicht-Zusammensetzung Polyethylene umfassen.

2. Geschichtete Polyethylenfolie nach Anspruch 1, wobei die Äußere-Schicht-Zusammensetzung weiterhin umfasst: b) eine unter hohem Druck erzeugte Polyethylen-Komponente BO, die ein LDPE (Polyethylen niedriger Dichte) mit einer Schmelzflussrate (MFR$_2$), bestimmt gemäß ISO 1133, von 0,25 bis 2 g /10 min und einer Dichte von 915 bis 930 kg/m$^3$ ist.

3. Geschichtete Polyethylenfolie nach Anspruch 2, wobei die Komponente BO in der Äußere-Schicht-Zusammensetzung mit einem Anteil von 5 bis 40 Gewichtsprozent basierend auf dem Gesamtgewicht der Äußere-Schicht-Zusammensetzung vorgesehen ist.

4. Geschichtete Polyethylenfolie nach einem der vorstehenden Ansprüche, wobei die Komponente AO ein Verhältnis MFR$_{21}$/MFR$_2$, bestimmt gemäß ISO 1133, von 13 bis 30 und eine Molekulargewichtsverteilung, bestimmt gemäß der herkömmlichen GPC (Gelpermeationschromatographie)-Methode und wie in der Beschreibung beschrieben, von 5 oder weniger aufweist.

5. Geschichtete Polyethylenfolie nach einem der vorstehenden Ansprüche, wobei die Komponente AO ein multimodales Ethylen-Terpolymer (I) ist, wobei die Comonomere vorzugsweise aus Alpha-Olefinen mit 4 bis 10 Kohlenstoffatomen ausgewählt sind.

6. Geschichtete Polyethylenfolie nach einem der vorstehenden Ansprüche, wobei die Folie eine Kernschicht umfasst, die aus einer Kernschicht-Zusammensetzung ausgebildet ist, die eine katalytisch erzeugte Polyethylen-Komponente AC mit einer Schmelzflussrate (MFR$_2$), bestimmt gemäß ISO 1133, von 0,2 bis 2 g/10 min und einer Dichte von 950 bis 970 kg/m$^3$ umfasst und/oder eine katalytisch erzeugte Polyethylen-Komponente BC, die ein Ethylen-Copolymer und vorzugsweise ein Ethylen-Terpolymer (II) ist, mit einer Schmelzflussrate (MFR$_5$), bestimmt gemäß ISO 1133, von 0,6 bis 4 g/10 min und einer Dichte von 928 bis 940 kg/m$^3$ umfasst und/oder eine katalytisch erzeugte Polyethylen-Komponente CC, die ein Ethylen-Copolymer und vorzugsweise ein multimodales Ethylen-Copolymer ist, mit einer Dichte von 910 kg/m$^3$ bis 925 kg/m$^3$ und einer Schmelzflussrate (MFR$_2$), bestimmt gemäß ISO 1133, von 0,5 bis 2,0 g/10 min umfasst.

7. Geschichtete Polyethylenfolie nach einem der vorstehenden Ansprüche, wobei die Folie eine innere Schicht umfasst, die aus einer Innere-Schicht-Zusammensetzung ausgebildet ist, die eine katalytisch erzeugte Polyethylen-Komponente AI, die ein Ethylen-Copolymer und vorzugsweise ein multimodales Ethylen-Copolymer ist, mit einer Dichte von 910 kg/m$^3$ bis 925 kg/m$^3$ und einer Schmelzflussrate (MFR$_2$), bestimmt gemäß ISO 1133, von 0,5 bis 2,0 g/10 min und/oder eine Komponente BI, die ein unter hohem Druck erzeugtes LDPE ist, mit einer Schmelzflussrate MFR$_2$, bestimmt gemäß ISO 1133, von 0,25 bis 2 g/10 min und einer Dichte von 915 bis 930 kg/m$^3$ umfasst.

8. Geschichtete Polyethylenfolie nach einem der vorstehenden Ansprüche, wobei die Folie eine oder mehrere Sub-Skin-Schichten umfasst, die aus einer Sub-Skin-Schicht-Zusammensetzung ausgebildet sind, die eine katalytisch erzeugte Polyethylen-Komponente AS, die ein Ethylen-Copolymer und vorzugsweise ein multimodales Ethylen-Copolymer ist, mit einer Dichte von 910 kg/m$^3$ bis 925 kg/m$^3$ und einer Schmelzflussrate (MFR$_2$), bestimmt gemäß ISO 1133, von 0,5 bis 2,0 g/10 min umfasst und/oder eine katalytisch erzeugte Komponente BS, die ein Ethylen-Copolymer ist, mit einer Schmelzflussrate (MFR$_2$), bestimmt gemäß ISO 1133, von 0,5 bis 10 g/10 min und einer Dichte von 920 bis 935 kg/m$^3$ umfasst und/oder eine Komponente CS, die ein unter hohem Druck erzeugtes LDPE ist, mit einer Schmelzflussrate (MFR$_2$), bestimmt gemäß ISO 1133, von 0,25 bis 2 g/10 min und einer Dichte von 915 bis 930 kg/m$^3$ umfasst.

9. Geschichtete Polyethylenfolie nach einem der vorstehenden Ansprüche, wobei die Folie eine Wasserdampfdurchlassrate (38 °C; 90 % RH), bestimmt an einer nicht-ausgerichteten Folie gemäß ISO 15106-2, von 8,3 g/m$^2$/d oder niedriger und vorzugsweise 6,0 g/m$^2$/d oder niedriger aufweist und/oder eine Sauerstoffdurchlassrate (23 °C; 100 % O$_2$; 0 % RH)[5], bestimmt an einer nicht-ausgerichteten Folie gemäß ISO 15105-1, von 5500 cm$^3$/m$^2$/d oder niedriger und vorzugsweise 4000 cm$^3$/m$^2$/d oder niedriger aufweist.

10. Verfahren zum Erzeugen einer Folie gemäß einem der vorstehenden Ansprüche, wobei die Schichten der Folie coextrudiert werden.

11. Verfahren zum Ausbilden einer barrierebeschichteten Folie, wobei eine Barrierebeschichtungsschicht auf der äußeren Schicht einer geschichteten Polyethylenfolie gemäß einem der Ansprüche 1 bis 9 ausgebildet wird.

12. Barrierebeschichtete Polyethylenfolie, die die geschichtete Polyethylenfolie gemäß einem der vorstehenden Ansprüche und eine Barrierebeschichtungsschicht, die an der äußeren Schicht der geschichteten Polyethylenfolie ausgebildet wurde, umfasst, wobei die barrierebeschichtete Polyethylenfolie vorzugsweise eine Wasserdampfdurchlassrate (38 °C; 90 % RH), bestimmt gemäß ISO 15106-2, von 1,0 g/m$^2$/d oder niedriger aufweist und/oder eine Sauerstoffdurchlassrate (23 °C; 100 % O$_2$; 0 % RH), bestimmt gemäß ISO 15105-1, von 150 cm$^3$/m$^2$/d oder niedriger aufweist.

13. Laminat oder Artikel, der die barrierebeschichtete Polyethylenfolie gemäß Anspruch 12 umfasst, wobei es sich vorzugsweise um ein Laminat oder einen Artikel handelt, bei dem die barrierebeschichtete Polyethylenfolie auf eine andere Schicht laminiert ist.

14. Laminat oder Artikel nach Anspruch 13, wobei das Laminat oder der Artikel eine Wasserdampfdurchlassrate (38 °C; 90 % RH), bestimmt gemäß ISO 15106-2, von 0,5 g/m$^2$/d oder niedriger aufweist, und/oder eine Sauerstoffdurchlassrate (23 °C; 100 % O$_2$; 0 % RH), bestimmt gemäß ISO 15105-1, von 30 cm$^3$/m$^2$/d oder niedriger aufweist und wobei der Artikel vorzugsweise ein Beutel oder eine Tüte ist.

15. Verwendung des Artikels gemäß Anspruch 14 für das Verpacken von Artikeln.


**Revendications**

1. Film de polyéthylène stratifié comprenant une couche extérieure pour revêtement barrière constituée d'une composition de couche extérieure,

   une couche intérieure qui est une couche extérieure du film sur le côté opposé à la couche extérieure, où la couche intérieure est constituée d'une composition de couche intérieure ; et
   une couche centrale, qui est présente en tant que couche intermédiaire entre la couche extérieure et la couche intérieure du film, où la couche centrale est constituée d'une composition de couche centrale,
   où la composition de couche extérieure comprend

   a) un composant AO de polyéthylène produit par voie catalytique, qui est un copolymère d'éthylène ayant un MFR$_2$ déterminé selon la norme ISO 1133 de 0,5 à 10 g/10 min et une densité de 920 à 935 kg/m$^3$, le composant AO étant présent dans la composition de couche extérieure en une quantité d'au moins 70 % en poids,

   où la composition de couche extérieure a une fraction soluble dans le xylène (XS) déterminée selon la norme ISO 16152 de 2 % en poids ou moins, et tous les composants polymères présents dans la composition de couche intérieure et dans la composition de couche centrale comprennent des polyéthylènes.

2. Film de polyéthylène stratifié selon la revendication 1, où la composition de couche extérieure comprend en outre b) un composant BO de polyéthylène produit sous haute pression, qui est un LDPE ayant un MFR$_2$ déterminé selon la norme ISO 1133 de 0,25 à 2 g/10 min et une densité de 915 à 930 kg/m$^3$.

3. Film de polyéthylène stratifié selon la revendication 2, où le composant BO est présent dans la composition de couche extérieure en une quantité de 5 à 40 % en poids, par rapport au poids total de la composition de couche extérieure.

4. Film de polyéthylène stratifié selon l'une quelconque des revendications précédentes, où le composant AO a un rapport MFR$_{21}$/MFR$_2$ déterminé selon la norme ISO 1133 de 13 à 30 et une MWD déterminée selon la méthode GPC conventionnelle décrite dans la spécification de 5 ou moins.

5. Film de polyéthylène stratifié selon l'une quelconque des revendications précédentes, où le composant AO est un terpolymère d'éthylène multimodal (I), où les comonomères sont de préférence choisis parmi les alpha-oléfines ayant de 4 à 10 atomes de carbone.

6. Film de polyéthylène stratifié selon l'une quelconque des revendications précédentes, où le film comprend une couche centrale constituée d'une composition de couche centrale qui comprend un composant de polyéthylène AC produit par voie catalytique ayant un $MFR_2$ déterminé selon la norme ISO 1133 de 0,2 à 2 g/10 min et une densité de 950 à 970 kg/m$^3$ et/ou comprend un composant de polyéthylène BC produit par voie catalytique qui est un copolymère d'éthylène, de préférence un terpolymère d'éthylène (II), ayant un indice de fluidité à chaud $MFR_5$ déterminé selon la norme ISO 1133 de 0,6 à 4 g/10 min et une densité de 928 à 940 kg/m$^3$, et/ou comprend un composant de polyéthylène CC produit par voie catalytique qui est un copolymère d'éthylène, de préférence un copolymère d'éthylène multimodal, ayant une densité de 910 kg/m$^3$ à 925 kg/m$^3$ et un $MFR_2$ déterminé selon la norme ISO 1133 de 0,5 à 2,0 g/10 min.

7. Film de polyéthylène stratifié selon l'une quelconque des revendications précédentes, où le film comprend une couche intérieure constituée d'une composition de couche intérieure qui comprend un composant de polyéthylène AI produit par voie catalytique, qui est un copolymère d'éthylène, de préférence un copolymère d'éthylène multimodal, ayant une densité de 910 kg/m$^3$ à 925 kg/m$^3$ et un $MFR_2$ déterminé selon la norme ISO 1133 de 0,5 à 2,0 g/10 min et/ou un composant BI qui est un LDPE produit à haute pression ayant un $MFR_2$ déterminé selon la norme ISO 1133 de 0,25 à 2 g/10 min et une densité de 915 à 930 kg/m$^3$.

8. Film de polyéthylène stratifié selon l'une quelconque des revendications précédentes, où le film comprend une ou plusieurs sous-couches superficielles constituées d'une composition de sous-couche superficielle qui comprend un composant AS de polyéthylène produit par voie catalytique, qui est un copolymère d'éthylène, de préférence un copolymère d'éthylène multimodal, ayant une densité de 910 kg/m$^3$ à 925 kg/m$^3$ et un $MFR_2$ déterminé selon la norme ISO 1133 de 0,5 à 2,0 g/10 min et/ou comprend un composant BS produit par voie catalytique qui est un copolymère d'éthylène ayant un $MFR_2$ déterminé selon la norme ISO 1133 de 0,5 à 10 g/10 min et une densité de 920 à 935 kg/m$^3$ et/ou comprend un composant CS qui est un LDPE produit à haute pression ayant un $MFR_2$ déterminé selon la norme ISO 1133 de 0,25 à 2 g/10 min et une densité de 915 à 930 kg/m$^3$.

9. Film de polyéthylène stratifié selon l'une quelconque des revendications précédentes, où le film a un taux de transmission de vapeur d'eau (38 °C ; 90 % HR) déterminé sur un film non orienté selon la norme ISO 15106-2 de 8,3 g/m$^2$/j ou moins, de préférence de 6,0 g/m$^2$/j ou moins, et/ou a un taux de transmission d'oxygène (23 °C ; 100 % O2 ; 0 % HR)$^5$ déterminé sur un film non orienté selon la norme ISO 15105-1 de 5 500 cm$^3$/m$^2$/j ou moins, de préférence de 4 000 cm$^3$/m$^2$/j ou moins.

10. Procédé de production d'un film selon l'une quelconque des revendications précédentes, où les couches du film sont coextrudées.

11. Procédé de formation d'un film à revêtement barrière, où une couche de revêtement barrière est formée sur la couche extérieure d'un film de polyéthylène stratifié selon l'une quelconque des revendications 1 à 9.

12. Film de polyéthylène à revêtement barrière comprenant le film de polyéthylène stratifié selon l'une quelconque des revendications précédentes et une couche de revêtement barrière, qui a été formée sur la couche extérieure du film de polyéthylène stratifié, où, de préférence, le film de polyéthylène à revêtement barrière a un taux de transmission de vapeur d'eau (38 °C ; 90 % HR) déterminé selon la norme ISO 15106-2 de 1,0 g/m$^2$/j ou moins, et/ou a un taux de transmission d'oxygène (23 °C ; 100 % O2 ; 0 % HR) déterminé selon la norme ISO 15105-1 de 150 cm$^3$/m$^2$/j ou moins.

13. Stratifié ou article comprenant le film de polyéthylène à revêtement barrière selon la revendication 12, de préférence stratifié ou article où le film de polyéthylène à revêtement barrière est stratifié sur une autre couche.

14. Stratifié ou article selon la revendication 13, où le stratifié ou l'article a un taux de transmission de vapeur d'eau (38 °C ; 90 % HR) déterminé selon la norme ISO 15106-2 de 0,5 g/m$^2$/j ou moins, et/ou a un taux de transmission d'oxygène (23 °C ; 100 % O2 ; 0 % HR) déterminé selon la norme ISO 15105-1 de 30 cm$^3$/m$^2$/j ou moins, et où l'article est de préférence un sachet ou un sac.

15. Utilisation de l'article selon la revendication 14 pour l'emballage d'articles.

Figure 1:

Figure 2:

Figure 3:

Figure 4:

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3101060 A
- WO 2016083208 A
- WO 2017055174 A
- WO 2020109289 A
- WO 03066698 A
- WO 2019081611 A